# EUROPÄISCHE PATENTSCHRIFT

(11) **EP 4 025 970 B1**
(45) Veröffentlichungstag und Bekanntmachung des Hinweises auf die Patenterteilung: **18.06.2025**
(21) Anmeldenummer: 20761833.1
(22) Anmeldetag: 26.08.2020
(51) Int. Cl.: G05G 5/03, G06F 3/0362, G05G 1/08

(54) **BEDIENVORRICHTUNG FÜR EIN FAHRZEUG UND VERFAHREN ZUM EINSTELLEN EINER BETÄTIGUNGSCHARAKTERISTIK EINER BEDIENVORRICHTUNG**
OPERATING DEVICE FOR A VEHICLE AND METHOD FOR ADJUSTING AN OPERATING CHARACTERISTIC OF AN OPERATING DEVICE
DISPOSITIF DE COMMANDE POUR UN VÉHICULE ET PROCÉDÉ POUR RÉGLER UNE CARACTÉRSTIQUE DE FONCTIONNEMENT D'UN DISPOSITIF DE COMMANDE

(30) Priorität: 06.09.2019 DE 102019213554
(43) Veröffentlichungstag der Anmeldung: 13.07.2022
(73) Patentinhaber: Signata GmbH, 49356 Diepholz (DE)
(72) Erfinder: SCHRADER, Fabian, 88046 Friedrichshafen (DE); PANTKE, Michael, 88048 Friedrichshafen (DE); RUIDER, Martin, 92447 Schwarzhofen (DE); SPREHE, Magnus, 49439 Steinfeld (DE); HAEVESCHER, Rainer, 32351 Stemwede (DE); NEUMANN, Artur, 32689 Kalletal (DE); SANDER, Thorsten, 32369 Rahden (DE); TENCKHOFF, Georg, 88048 Friedrichshafen (DE); BIEGGER, Erwin, 88239 Wangen im Allgäu (DE)
(86) Internationale Anmeldenummer: PCT/EP2020/073855
(87) Internationale Veröffentlichungsnummer: WO 2021/043648

(56) Entgegenhaltungen:
- EP-A1- 2 065 614
- DE-A1- 102015 118 752
- JP-A- 2016 218 831
- US-A1- 2001 052 893

## Beschreibung

Der vorliegende Ansatz bezieht sich auf eine Bedienvorrichtung für ein Fahrzeug gemäß dem Oberbegriff des Anspruchs und ein Verfahren zum Einstellen einer Betätigungscharakteristik einer Bedienvorrichtung gemäß dem Oberbegriff des Anspruchs 10.

Eine Bedienvorrichtung der eingangs genannten Art ist aus der JP 2016 218831 A bekannt. Magnetorheologische Elastomere in Bedienvorrichtungen werden auch in der EP 2 2065 614 A1 und US 2001/052893 A1 behandelt.

Wenn ein magnetorheologisches Fluid (MRF) über die Bestromung einer Spule einem Magnetfeld ausgesetzt wird, wird im MRF eine Änderung der Viskosität hervorgerufen. Dadurch ist es möglich, Endanschläge und eine Rastierung für ein Bauteil ohne Mechanik zu realisieren.

Vor diesem Hintergrund schafft der vorliegende Ansatz eine verbesserte Bedienvorrichtung für ein Fahrzeug und ein verbessertes Verfahren zum Einstellen einer Betätigungscharakteristik einer Bedienvorrichtung gemäß den Hauptansprüchen. Vorteilhafte Ausgestaltungen ergeben sich aus den abhängigen Ansprüchen und der nachfolgenden Beschreibung.

Die mit dem vorgestellten Ansatz erreichbaren Vorteile bestehen darin, dass eine einfach montierbare Bedienvorrichtung geschaffen wird, welche stabil und verschleißarm rastierbar ist. Das magnetorheologische Elastomer kann schnell und einfach montiert werden. Vorteilhafterweise sind im Unterschied zu einem magnetorheologischen Fluid keine Dichtungen erforderlich. Auch tritt beim Einsatz eines magnetorheologischen Elastomers lediglich eine geringe Abrasion auf. Hierzu ist erfindungsgemäß vorgesehen, dass im Ruhezustand das magnetorheologische Elastomer beabstandet zu dem Bedienelement angeordnet ist, um als die erste Betätigungscharakteristik die Betätigung widerstandslos freizugeben und im Aktivierungszustand das Bedienelement mechanisch zu kontaktieren, um als die zweite Betätigungscharakteristik einen Widerstand bei der Betätigung zu erzeugen.

Eine Bedienvorrichtung für ein Fahrzeug weist ein bewegliches Bedienelement, ein Gehäuse, ein magnetorheologisches Elastomer und eine Spule auf. Ein erstes Ende des Bedienelements ist in dem Gehäuse gelagert. Das magnetorheologische Elastomer ist dazu ausgebildet, um in einem Ruhezustand eine erste Betätigungscharakteristik für eine Betätigung des Bedienelements und in einem Aktivierungszustand eine zweite Betätigungscharakteristik für die Betätigung zu bewirken. Die Spule ist dazu ausgebildet, um ein Magnetfeld zu erzeugen, das dazu ausgebildet ist, um ein Überführen des magnetorheologischen Elastomers zwischen dem Ruhezustand und dem Aktivierungszustand zu bewirken.

Die Bedienvorrichtung kann zum Bedienen einer beliebigen Fahrzeugfunktion des Fahrzeugs ausgebildet sein. Die Betätigung des Bedienelements kann manuell von einem Nutzer durchgeführt werden. Ein zweites Ende des Bedienelements kann aus dem Gehäuse hervorstehend angeordnet sein, um die Betätigung zu ermöglichen. Beispielsweise kann die Bedienvorrichtung im Bereich eines Armaturenbretts, Schalthebels, Lenkrads oder einer Mittelkonsole eines Fahrzeugs eingesetzt werden. Der Ruhezustand des magnetorheologischen Elastomers kann als ein Zustand verstanden werden, in dem kein Magnetfeld auf das magnetorheologische Elastomer wirkt, die Spule also nicht bestromt wird. Der Aktivierungszustand des magnetorheologischen Elastomers kann als ein Zustand verstanden werden, in dem ein Magnetfeld auf das magnetorheologische Elastomer wirkt, die Spule also bestromt wird. Durch Anlegen des äußeren Magnetfelds können viskoelastische oder dynamisch-mechanische Eigenschaften des magnetorheologischen Elastomers schnell und reversibel verändert werden, wobei zwischen dem Ruhezustand und dem Aktivierungszustand eine Verformung des magnetorheologische Elastomers stattfindet. Die Bedienvorrichtung kann somit als ein Schalter, beispielsweise als ein Drehschalter eingesetzt werden. Im Aktivierungszustand kann einem Nutzer, der das Bedienelement betätigt, das Gefühl vermittelt werden, dass das Bedienelement eingerastet ist.

Der Einsatz eines magnetorheologischen Elastomers zur Realisierung unterschiedlicher Betätigungscharakteristika für die Betätigung ermöglicht bei der Betätigung unterschiedliche haptische Rückmeldungen an den Nutzer und zusätzlich oder alternativ eine Rastierfunktion des Bedienelements.

Das magnetorheologische Elastomer kann beispielsweise ein durch das Magnetfeld ausdehnbares Material aufweisen. So kann das magnetorheologische Elastomer durch das Magnetfeld in eine definierte Richtung ausgelenkt oder verformt werden, um im so erzeugten Aktivierungszustand des magnetorheologischen Elastomers das Bedienelement zu kontaktieren oder auf das Bedienelement zu drücken. Das magnetorheologische Elastomer kann hierzu beispielsweise eine Mehrzahl von Eisenpartikeln aufweisen.

In einer Ausführungsform kann der Widerstand eine erschwerte Betätigung oder sogar ein Blockieren der Betätigung des Bedienelements bewirken.

Gemäß einer Ausführungsform kann das magnetorheologische Elastomer im Ruhezustand beabstandet zu dem ersten Ende des Bedienelements angeordnet sein und in dem Aktivierungszustand das erste Ende mechanisch kontaktieren. So kann auch das magnetorheologische Elastomer geschützt in dem Gehäuse aufgenommen sein, in dem auch das erste Ende aufgenommen ist. Beispielsweise kann das magnetorheologische Elastomer angeordnet sein, um im Aktivierungszustand das erste Ende von einer Seite zu kontaktieren, welche einer weiteren Seite gegenüberliegt, von der das erste Ende in dem Gehäuse gelagert ist. So kann das magnetorheologische Elastomer ein Einspannen des ersten Endes zwischen dem magnetorheologischen Elastomer und einem Lager ermöglichen. Das magnetorheologische Elastomer kann in dem Gehäuse gelagert sein.

Das erste Ende kann eine Läuferscheibe des Bedienelements umfassen. Beispielsweise kann das magnetorheologische Elastomer im Aktivierungszustand einen Randabschnitt oder Umlaufrand der Läuferscheibe horizontal oder vertikal kontaktieren. Das Bedienelement kann einstückig ausgeformt sein, wobei sich die Läuferscheibe senkrecht zu dem zweiten Ende erstrecken kann. Das erste Ende des Bedienelements kann in dem Gehäuse drehbar gelagert sein. Durch Drehen des zweiten Endes kann das erste Ende entsprechend gedreht werden.

Gemäß einer Ausführungsform kann die Spule das erste Ende und/oder das magnetorheologisches Elastomer ringförmig umschließen. Somit ist eine Anordnung der Spule benachbart zu dem magnetorheologischen Elastomer ermöglicht, um ein wirkungsvolles Überführen zwischen den Zuständen zu ermöglichen. Das magnetorheologische Elastomer kann ringförmig ausgeformt sein. Dies ermöglicht eine gleichmäßige haptische Rückmeldung während der zweiten Betätigungscharakteristik oder ein besonders stabiles Blockieren des Bedienelements, beispielsweise durch Kontaktieren eines gesamten Umlaufrands der Läuferscheibe im Aktivierungszustand.

Es ist weiterhin von Vorteil, wenn die Bedienvorrichtung ferner eine Stromquelle zum Bereitstellen von Strom zum Bestromen der Spule zum Erzeugen des Magnetfelds aufweist.

Ein Verfahren zum Einstellen einer Betätigungscharakteristik einer der vorangehend beschriebenen Bedienvorrichtungen weist einen Schritt des Aktivierens und einen Schritt des Deaktivierens auf. Im Schritt des Aktivierens wird die Spule aktiviert, um ein Magnetfeld zu erzeugen, um ein Überführen des magnetorheologischen Elastomers von dem Ruhezustand zu dem Aktivierungszustand zu bewirken, um die zweite Betätigungscharakteristik für die Betätigung zu bewirken. Im Schritt des Aktivierens kann die Spule beispielsweise durch eine Stromquelle bestromt werden. Im Schritt des Deaktivierens wird die Spule deaktiviert, um ein Überführen des magnetorheologischen Elastomers von dem Aktivierungszustand zu dem Ruhezustand zu bewirken, um die erste Betätigungscharakteristik für die Betätigung zu bewirken. Im Schritt des Deaktivierens kann eine Bestromung der Spule durch beispielsweise eine Stromquelle deaktiviert werden.

Dieses Verfahren kann beispielsweise in Software oder Hardware oder in einer Mischform aus Software und Hardware beispielsweise in einem Steuergerät implementiert sein.

Ausführungsbeispiele des hier vorgestellten Ansatzes sind in den Zeichnungen dargestellt und in der nachfolgenden Beschreibung näher erläutert. Es zeigt:
Fig. 1 einen Querschnitt eines Fahrzeugs mit einer Bedienvorrichtung gemäß einem Ausführungsbeispiel;
Fig. 2 einen Querschnitt einer Bedienvorrichtung gemäß einem Ausführungsbeispiel;
Fig. 3 einen Querschnitt einer Bedienvorrichtung gemäß einem Ausführungsbeispiel; und
Fig. 4 ein Ablaufdiagramm eines Verfahrens zum Einstellen einer Betätigungscharakteristik einer Bedienvorrichtung gemäß einem Ausführungsbeispiel.

In der nachfolgenden Beschreibung bevorzugter Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

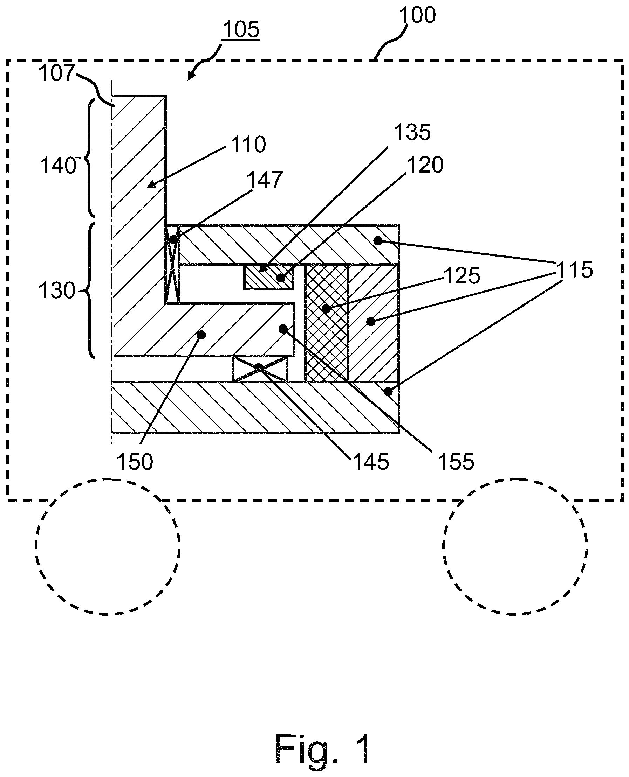

Fig. 1 zeigt einen rein schematischen Querschnitt eines Fahrzeugs 100 mit einer Bedienvorrichtung 105 gemäß einem Ausführungsbeispiel. Von der Bedienvorrichtung 105 ist gemäß diesem Ausführungsbeispiel lediglich eine entlang einer Schnittlinie 107 geschnittene Hälfte dargestellt.

Die Bedienvorrichtung 105 ist gemäß diesem Ausführungsbeispiel in oder an dem Fahrzeug 100 aufgenommen und dazu ausgebildet, um eine beliebige Fahrzeugfunktion des Fahrzeugs 100 zu bedienen, beispielsweise einzustellen. Beispielsweise kann die Bedienvorrichtung 105 durch einen Insassen des Fahrzeugs 100 manuell betätigt werden. Gemäß einem Ausführungsbeispiel wird die Bedienvorrichtung 105 verwendet, um eine Assistenzfunktion oder Entertainmentfunktion des Fahrzeugs 100 einzustellen, zu aktivieren oder zu deaktivieren.

Die Bedienvorrichtung 105 weist ein bewegliches Bedienelement 110, ein Gehäuse 115, ein magnetorheologisches Elastomer 120 und eine Spule 125 auf. Ein erstes Ende 130 des Bedienelements 110 ist in dem Gehäuse 115 gelagert. Auf diese Weise kann das Bedienelement 110 bei einer Betätigung durch einen Insassen relativ zu dem Gehäuse 115 bewegt werden. Das magnetorheologische Elastomer 120 ist dazu ausgebildet, um in einem Ruhezustand 135 eine erste Betätigungscharakteristik für eine Betätigung des Bedienelements 110 und in einem Aktivierungszustand eine zweite Betätigungscharakteristik für die Betätigung zu bewirken. Die Spule 125 ist dazu ausgebildet, um ein Magnetfeld zu erzeugen, das dazu ausgebildet ist, um ein Überführen des magnetorheologischen Elastomers 120 zwischen dem Ruhezustand 135 und dem Aktivierungszustand zu bewirken.

Das Bedienelement 110 ist gemäß diesem Ausführungsbeispiel als ein Drehknopf ausgeformt. Das Bedienelement 110 kann einstückig oder mehrstückig ausgeformt sein. In dem gezeigten Ausführungsbeispiel weist das Bedienelement 110 beispielhaft einen T-förmig Querschnitt auf. Alternativ kann das Bedienelement 110 auch als ein Stift mit einem rechteckigen Querschnitt ausgeformt sein oder einen L-förmigen Querschnitt aufweisen. Gemäß diesem Ausführungsbeispiel steht ein zweites Ende 140 des Bedienelements 110 gerade aus dem Gehäuse 115 hervor um die Betätigung durch den Insassen zu ermöglichen. Das Bedienelement 110 ist über ein erstes Lager 145 und ein zweites Lager 147 gegenüber dem Gehäuse 115 gelagert.

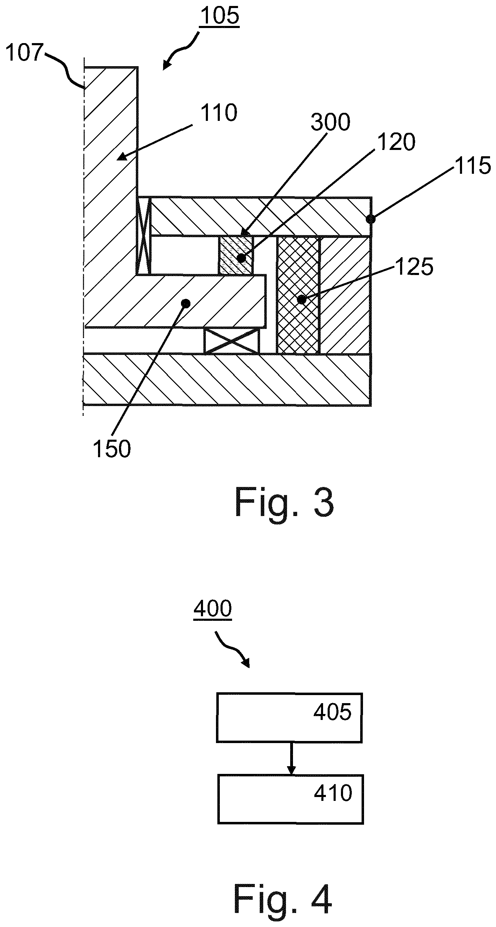

Das magnetorheologische Elastomer 120 weist gemäß diesem Ausführungsbeispiel ein durch das Magnetfeld ausdehnbares Material auf. Gemäß diesem Ausführungsbeispiel weist das magnetorheologische Elastomer 120 eine Mehrzahl von Eisenpartikeln aufweisen. Im hier gezeigten Ruhezustand 135 ist das magnetorheologische Elastomer 120 beabstandet zu dem Bedienelement 110 angeordnet, um als die erste Betätigungscharakteristik die Betätigung widerstandslos freizugeben. Im in Fig. 3 gezeigten Aktivierungszustand kontaktiert das magnetorheologische Elastomer 120 das Bedienelement 110 mechanisch, um als die zweite Betätigungscharakteristik einen Widerstand bei der Betätigung zu erzeugen.

Gemäß diesem Ausführungsbeispiel ist das magnetorheologische Elastomer 120 im Ruhezustand 135 beabstandet zu dem ersten Ende 130 des Bedienelements 110 angeordnet. Gemäß einem alternativen Ausführungsbeispiel kontaktiert das magnetorheologische Elastomer 120 in dem Aktivierungszustand das erste Ende 130 mechanisch. Das magnetorheologische Elastomer 120 ist gemäß diesem Ausführungsbeispiel in dem Gehäuse 115 aufgenommen, gemäß diesem Ausführungsbeispiel an einem eben ausgeformten Deckelelement des Gehäuses 115, durch das sich das zweite Ende 140 aus dem Gehäuse 115 heraus erstreckt.

Gemäß diesem Ausführungsbeispiel ist das magnetorheologische Elastomer 120 angeordnet, um im Aktivierungszustand das erste Ende 130 von einer Seite zu kontaktieren, welche einer weiteren Seite gegenüberliegt, von der das erste Ende 130 in dem Gehäuse 115 mittels des ersten Lagers 145 gelagert ist. Das magnetorheologische Elastomer 120 ist angeordnet, um im Aktivierungszustand das erste Ende 130 zwischen dem magnetorheologischen Elastomer 120 und dem ersten Lager 145 einzuspannen.

Das erste Ende 130 umfasst gemäß diesem Ausführungsbeispiel eine Läuferscheibe 150. Die Läuferscheibe 150 ist somit innerhalb des Gehäuses 115 angeordnet. Die Läuferscheibe 150 formt einen ringförmigen Fortsatz aus, der sich senkrecht zu einer Längsachse des geraden zweiten Endes 140 des Bedienelements 110 erstreckt. Somit weist das Bedienelement 110 im Bereich der Läuferscheibe 150 einen größeren Umfang als im Bereich des zweiten Endes 140 auf. Beispielhaft weist die Läuferscheibe 150 eine Dicke von weniger als 5 Millimetern auf. Das magnetorheologische Elastomer 120 ist dazu ausgebildet, um im Aktivierungszustand einen Randabschnitt 155 oder Umlaufrand der Läuferscheibe 150 vertikal zu kontaktieren. Das erste Ende 130 ist gemäß diesem Ausführungsbeispiel drehbar in dem Gehäuse 115 gelagert.

Gemäß einem Ausführungsbeispiel weist die Bedienvorrichtung 105 eine Sensorik auf, die ausgebildet ist, um eine Stellung, beispielsweise einen Drehwinkel des Bedienelements 110 zu erfassen. Dazu ist beispielsweise an der Läuferscheibe 150 ein Geberelement angeordnet. Ein solches Geberelement ist beispielsweise ein Magnet oder ein mechanisches Rastelement. Auf diese Weise kann eine Stellung oder Betätigung des Bedienelements 110 erfasst werden und es kann ein elektrisches Signal bereitgestellt werden, das die Stellung oder Betätigung des Bedienelements 110 anzeigt.

Die Spule 125 ist gemäß diesem Ausführungsbeispiel benachbart zu dem Randabschnitt 155 und/oder dem magnetorheologischen Elastomer 120 angeordnet. Auf diese Weise kann das magnetorheologische Elastomer 120 von einem unter Verwendung der Spule 125 erzeugten Magnetfeld durchdrungen werden.

Die Bedienvorrichtung 105 weist ferner gemäß einem Ausführungsbeispiel eine Stromquelle auf, die dazu ausgebildet ist, um Strom zum Bestromen der Spule 125 bereitzustellen, um das Magnetfeld zu erzeugen.

Die hier vorgestellte Bedienvorrichtung 105 weist somit ein mittels eines magnetorheologischen Elastomers 120 programmierbares Bedienelement 110 auf.

Die Bedienvorrichtung 105 erzeugt auf Basis des magnetorheologischen Elastomers 120, kurz "MRE", über eine Bestromung der Spule 125 ein Magnetfeld, welches eine Änderung der Ausformung des MRE hervorruft. Dadurch werden Endanschläge und/oder eine Rastierung ohne eine Mechanik realisiert.

Hierbei weist das magnetorheologische Elastomer 120 im Betrieb gegenüber einem magnetorheologischen Fluid (MRF) vorteilhafterweise keine oder lediglich eine geringfügige Abrasion auf. In der Montage der Bedienvorrichtung 105 ist kein Befüllvorgang sowie kein Abdichten des Systems notwendig, da das magnetorheologische Elastomer nicht flüssig ist.

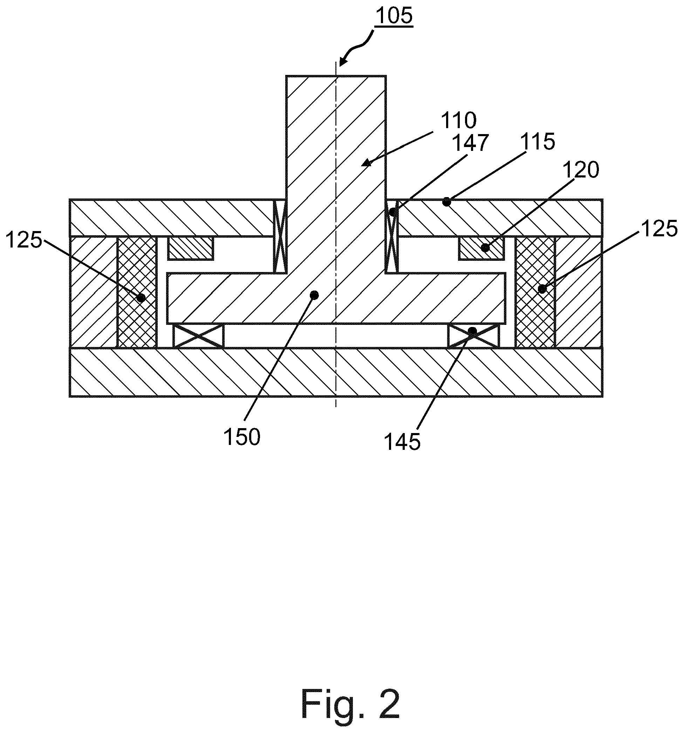

Fig. 2 zeigt einen Querschnitt einer Bedienvorrichtung 105 gemäß einem Ausführungsbeispiel. Dabei kann es sich um die in Fig. 1 beschriebene Bedienvorrichtung 105 handeln, von der gemäß diesem Ausführungsbeispiel auch die andere Hälfte dargestellt ist.

Das Gehäuse ist gemäß diesem Ausführungsbeispiel zylinderförmig und/oder kastenförmig ausgeformt, mit einer Einlassöffnung zum Durchführen des zweiten Endes des Bedienelements 110. Das zweite Lager 147 ist im Bereich der Einlassöffnung in einem Spalt zwischen dem Bedienelement 110 und dem Gehäuse 115 angeordnet. Das zweite Lager 147 umgibt den stiftförmigen Bereich des ersten Endes 130 ringförmig. Das erste Lager 145 ist zwischen einem der Einlassöffnung gegenüberliegenden Bodenabschnitt des Gehäuses 115 und der Läuferscheibe 150 angeordnet.

Die Spule 125 umschließt gemäß diesem Ausführungsbeispiel das erste Ende und/oder das magnetorheologisches Elastomer 120 ringförmig. Das magnetorheologische Elastomer 120 ist gemäß diesem Ausführungsbeispiel ringförmig ausgeformt. Ein Außendurchmesser des magnetorheologischen Elastomers 120 entspricht gemäß diesem Ausführungsbeispiel im Wesentlichen einem Außendurchmesser der Läuferscheibe 150.

Fig. 3 zeigt einen Querschnitt einer Bedienvorrichtung 105 gemäß einem Ausführungsbeispiel. Dabei kann es sich um die in Fig. 1 oder 2 beschriebene Bedienvorrichtung 105 handeln, mit dem Unterschied, dass das magnetorheologische Elastomer 120 gemäß diesem Ausführungsbeispiel in dem Aktivierungszustand 300 angeordnet ist.

Gemäß diesem Ausführungsbeispiel kontaktiert das magnetorheologische Elastomer 120 in dem Aktivierungszustand 300 das Bedienelement 110. Gemäß diesem Ausführungsbeispiel bewirkt der in dem Aktivierungszustand 300 erzeugte Widerstand eine erschwerte Betätigung oder sogar ein Blockieren der Betätigung des Bedienelements 110. Der Widerstand wird dadurch erzeugt, dass das magnetorheologische Elastomer 120 die Läuferscheibe 150 gegenüber dem Gehäuse 115 einklemmt.

Der Aktivierungszustand 300 ist durch ein Bestromen der Spule 125 und ein somit erzeugtes Magnetfeld herbeigeführt worden. Dieses Magnetfeld wirkt gemäß diesem Ausführungsbeispiel auf das magnetorheologische Elastomer 120. Durch in dem magnetorheologischen Elastomer 120 eingelagerte Eisenpartikel dehnt sich dieser gemäß den Feldlinien aus und übt dabei gemäß diesem Ausführungsbeispiel eine Kraft auf die Läuferscheibe 150 aus. Dadurch ergibt sich ein Bremsmoment gegenüber einer Drehung des Bedienelements 110. Die Spule 125 kann beliebig aktiviert und deaktiviert werden, um den Vorgang des Ausdehnens bzw. Schrumpfen des magnetorheologischen Elastomer 120 zu bewirken. Somit ist eine Rastfunktion ohne einer sonst dafür notwendigen Mechanik realisierbar.

Je nach Größe der von dem magnetorheologischen Elastomer 120 auf die Läuferscheibe 150 ausgeübten Kraft kann die Läuferscheibe 150 in dem Aktivierungszustand 300 festgestellt oder aus Sicht eines Insassen, der das Bedienelement 110 betätigt, schwer bewegbar sein. Gemäß einem Ausführungsbeispiel sind unterschiedliche Aktivierungszustände vorgesehen, die sich in der von dem magnetorheologischen Elastomer 120 auf die Läuferscheibe 150 ausgeübten Kraft unterscheiden. Dies kann durch unterschiedliches Bestromen der Spule 125 erreicht werden.

Alternativ zu dem gezeigten Ausführungsbeispiel kann das magnetorheologischen Elastomer 120 auch an einer anderen geeigneten Position angeordnet sein. Unabhängig von der Positionierung kann das magnetorheologische Elastomer 120 einstückig realisiert sein oder das magnetorheologische Elastomer 120 kann auf zwei oder mehrere Elemente verteilt sein.

Wenn das Bedienelement 110 alternativ linear beweglich in de Gehäuse 115 gelagert ist, kann das magnetorheologische Elastomer 120 in entsprechender Weise zum Freigeben oder Bremsen einer Linearbewegung des Bedienelements 110 eingesetzt werden.

Fig. 4 zeigt ein Ablaufdiagramm eines Verfahrens 400 zum Einstellen einer Betätigungscharakteristik einer Bedienvorrichtung gemäß einem Ausführungsbeispiel. Dabei kann es sich um eine der in einer der Figuren 1 bis 3 beschriebenen Bedienvorrichtungen handeln.

Das Verfahren 400 weist einen Schritt 405 des Aktivierens und einen Schritt 410 des Deaktivierens auf. Im Schritt 405 des Aktivierens wird die Spule aktiviert, um ein Magnetfeld zu erzeugen, um ein Überführen des magnetorheologischen Elastomers von dem Ruhezustand zu dem Aktivierungszustand zu bewirken, um die zweite Betätigungscharakteristik für die Betätigung zu bewirken. Im Schritt 405 des Aktivierens wird die Spule gemäß diesem Ausführungsbeispiel durch eine Stromquelle bestromt, um die Spule zu aktivieren. Im Schritt 410 des Deaktivierens wird die Spule deaktiviert, um ein Überführen des magnetorheologischen Elastomers von dem Aktivierungszustand zu dem Ruhezustand zu bewirken, um die erste Betätigungscharakteristik für die Betätigung zu bewirken. Im Schritt 410 des Deaktivierens wird gemäß diesem Ausführungsbeispiel eine Bestromung der Spule durch eine Stromquelle deaktiviert, um die Spule zu deaktivieren.

Gemäß einem Ausführungsbeispiel wird der Schritt 405 ausgeführt, wenn das Bedienelement der Bedienvorrichtung eine vorbestimmte Stellung eingenommen hat oder um einen vorbestimmten Weg bewegt wurde. Auf diese Weise kann einem Nutzer das Gefühl vermittelt werden, dass das Bedienelement eingerastet ist.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Bedienvorrichtung (105) für ein Fahrzeug (100), wobei die Bedienvorrichtung (105) die folgenden Merkmale aufweist:
ein bewegliches Bedienelement (110);
ein Gehäuse (115), in dem ein erstes Ende (130) des Bedienelements (110) gelagert ist;
ein magnetorheologisches Elastomer (120), das dazu ausgebildet ist, um in einem Ruhezustand (135) eine erste Betätigungscharakteristik für eine Betätigung des Bedienelements (110) und in einem Aktivierungszustand (300) eine zweite Betätigungscharakteristik für die Betätigung zu bewirken; und
eine Spule (125) zum Erzeugen eines Magnetfelds, das dazu ausgebildet ist, um ein Überführen des magnetorheologischen Elastomers (120) zwischen dem Ruhezustand (135) und dem Aktivierungszustand (300) zu bewirken, **dadurch gekennzeichnet, dass** das magnetorheologische Elastomer (120) im Ruhezustand (135) beabstandet zu dem Bedienelement (110) angeordnet ist, um als die erste Betätigungscharakteristik die Betätigung widerstandslos freizugeben und in dem Aktivierungszustand (300) das Bedienelement (110) mechanisch kontaktiert, um als die zweite Betätigungscharakteristik einen Widerstand bei der Betätigung zu erzeugen.

2. Bedienvorrichtung (105) gemäß Anspruch 1, bei der das magnetorheologische Elastomer (120) ein durch das Magnetfeld ausdehnbares Material aufweist.

3. Bedienvorrichtung (105) gemäß einem der vorangegangenen Ansprüche, bei der das magnetorheologische Elastomer (120) eine Mehrzahl von Eisenpartikeln aufweist.

4. Bedienvorrichtung (105) gemäß einem der vorangegangenen Ansprüche, bei der das magnetorheologische Elastomer (120) im Ruhezustand (135) beabstandet zu dem ersten Ende (130) des Bedienelements (110) angeordnet ist und in dem Aktivierungszustand (300) das erste Ende (130) mechanisch kontaktiert.

5. Bedienvorrichtung (105) gemäß Anspruch 4, bei der das erste Ende (130) eine Läuferscheibe (150) des Bedienelements (110) umfasst.

6. Bedienvorrichtung (105) gemäß einem der vorangegangenen Ansprüche, bei der das erste Ende (130) des Bedienelements (110) in dem Gehäuse (115) drehbar gelagert ist.

7. Bedienvorrichtung (105) gemäß einem der vorangegangenen Ansprüche, bei der die Spule (125) das erste Ende (130) und/oder das magnetorheologische Elastomer (120) ringförmig umschließt.

8. Bedienvorrichtung (105) gemäß einem der vorangegangenen Ansprüche, bei der das magnetorheologische Elastomer (120) ringförmig ausgeformt ist.

9. Bedienvorrichtung (105) gemäß einem der vorangegangenen Ansprüche, mit einer Stromquelle zum Bereitstellen von Strom zum Bestromen der Spule (125) zum Erzeugen des Magnetfelds.

10. Verfahren (400) zum Einstellen einer Betätigungscharakteristik einer Bedienvorrichtung (105) gemäß einem der vorangegangenen Ansprüche, wobei das Verfahren (400) die folgenden Schritte aufweist:
Aktivieren (405) der Spule (125), um ein Magnetfeld zu erzeugen, um ein Überführen des magnetorheologischen Elastomers (120) von dem Ruhezustand (135) zu dem Aktivierungszustand (300) zu bewirken, um die zweite Betätigungscharakteristik für die Betätigung zu bewirken; und
Deaktivieren (410) der Spule (125), um ein Überführen des magnetorheologischen Elastomers (120) von dem Aktivierungszustand (300) zu dem Ruhezustand (135) zu bewirken, um die erste Betätigungscharakteristik für die Betätigung zu bewirken.

## Claims

1. Operating device (105) for a vehicle (100), wherein the operating device (105) has the following features:
a movable control element (110);
a housing (115) in which a first end (130) of the control element (110) is mounted;
a magnetorheological elastomer (120) which is designed to produce a first actuation characteristic for actuation of the control element (110) in a rest state (135) and a second actuation characteristic for actuation in an activation state (300); and
a coil (125) for generating a magnetic field, which is designed to cause the magnetorheological elastomer (120) to be transferred between the rest state (135) and the activation state (300), **characterised in that** the magnetorheological elastomer (120) is arranged in the rest state (135) at a distance from the operating element (110) in order to release the actuation without resistance as the first actuation characteristic and, in the activation state (300), mechanically contacts the operating element (110) in order to generate resistance during actuation as the second actuation characteristic.

2. Operating device (105) according to claim 1, wherein the magnetorheological elastomer (120) comprises a material that can be expanded by the magnetic field.

3. Operating device (105) according to one of the preceding claims, wherein the magnetorheological elastomer (120) comprises a plurality of iron particles.

4. Operating device (105) according to one of the preceding claims, wherein the magnetorheological elastomer (120) is arranged in the rest state (135) spaced apart from the first end (130) of the actuator element (110) and, in the activation state (300), mechanically contacts the first end (130).

5. Operating device (105) according to claim 4, wherein the first end (130) comprises a rotor disc (150) of the actuator element (110).

6. Operating device (105) according to one of the preceding claims, wherein the first end (130) of the operating element (110) is rotatably mounted in the housing (115).

7. Operating device (105) according to one of the preceding claims, wherein the coil (125) surrounds the first end (130) and/or the magnetorheological elastomer (120) in an annular manner.

8. Operating device (105) according to one of the preceding claims, wherein the magnetorheological elastomer (120) is formed in a ring shape.

9. Operating device (105) according to one of the preceding claims, with a power source for supplying power to the coil (125) to generate the magnetic field.

10. Method (400) for adjusting an actuation characteristic of an operating device (105) according to one of the preceding claims, wherein the method (400) comprises the following steps:
activating (405) the coil (125) to generate a magnetic field to cause the magnetorheological elastomer (120) to transition from the rest state (135) to the activation state (300) to effect the second operating characteristic for operation; and
deactivating (410) the coil (125) to cause the magnetorheological elastomer (120) to transition from the activated state (300) to the rest state (135) to effect the first actuation characteristic for actuation.

## Revendications

1. Dispositif de commande (105) pour un véhicule (100), le dispositif de commande (105) présentant les caractéristiques suivantes :
un élément de commande mobile (110);
un boîtier (115) dans lequel est logée une première extrémité (130) de l'élément de commande (110);
un élastomère magnéto-rhéologique (120) qui est conçu pour provoquer, dans un état de repos (135), une première caractéristique d'actionnement pour l'actionnement de l'élément de commande (110) et, dans un état d'activation (300), une deuxième caractéristique d'actionnement pour l'actionnement ; et une bobine (125) pour générer un champ magnétique, qui est conçue pour provoquer une transition de l'élastomère magnéto-rhéologique (120) entre l'état de repos (135) et l'état d'activation (300), **caractérisé en ce que** l'élastomère magnéto-rhéologique (120) est disposé dans l'état de repos (135) à distance de l'élément de commande (110) afin de libérer l'actionnement sans résistance en tant que première caractéristique d'actionnement et, dans l'état d'activation (300), entre en contact mécanique avec l'élément de commande (110) afin de générer, en tant que deuxième caractéristique d'actionnement, une résistance lors de l'actionnement.

2. Dispositif de commande (105) selon la revendication 1, dans lequel l'élastomère magnétorhéologique (120) comprend un matériau expansible sous l'effet du champ magnétique.

3. Dispositif de commande (105) selon l'une des revendications précédentes, dans lequel l'élastomère magnétorhéologique (120) comprend une pluralité de particules de fer.

4. Dispositif de commande (105) selon l'une des revendications précédentes, dans lequel l'élastomère magnétorhéologique (120) est disposé, à l'état de repos (135), à distance de la première extrémité (130) de l'élément de commande (110) et, à l'état d'activation (300), est en contact mécanique avec la première extrémité (130).

5. Dispositif de commande (105) selon la revendication 4, dans lequel la première extrémité (130) comprend un disque rotatif (150) de l'élément de commande (110).

6. Dispositif de commande (105) selon l'une des revendications précédentes, dans lequel la première extrémité (130) de l'élément de commande (110) est montée de manière rotative dans le boîtier (115).

7. Dispositif de commande (105) selon l'une des revendications précédentes, dans lequel la bobine (125) entoure de manière annulaire la première extrémité (130) et/ou l'élastomère magnétorhéologique (120).

8. Dispositif de commande (105) selon l'une des revendications précédentes, dans lequel l'élastomère magnétorhéologique (120) est formé en anneau.

9. Dispositif de commande (105) selon l'une des revendications précédentes, avec une source de courant pour fournir du courant à la bobine (125) afin de générer le champ magnétique.

10. Procédé (400) pour régler une caractéristique d'actionnement d'un dispositif de commande (105) selon l'une des revendications précédentes, le procédé (400) comprenant les étapes suivantes :
Activer (405) la bobine (125) afin de générer un champ magnétique pour faire passer l'élastomère magnéto-rhéologique (120) de l'état de repos (135) à l'état d'activation (300) afin de provoquer la deuxième caractéristique de fonctionnement pour le fonctionnement ; et
désactiver (410) la bobine (125) afin de faire passer l'élastomère magnéto-rhéologique (120) de l'état d'activation (300) à l'état de repos (135) afin de provoquer la première caractéristique d'actionnement pour l'actionnement.
